# EUROPEAN PATENT SPECIFICATION

(11) **EP 0 259 039 B1**
(45) Date of publication and mention of the grant of the patent: **24.02.1993**
(21) Application number: 87307171.6
(22) Date of filing: 13.08.1987
(51) Int. Cl.: G11B 5/596, G11B 21/10, G11B 5/55

(54) **Magnetic disc apparatus**
Gerät für magnetische Scheiben
Appareil à disques magnétiques

(30) Priority: 27.08.1986 JP 201140/86; 01.09.1986 JP 205713/86
(43) Date of publication of application: 09.03.1988
(73) Proprietor: SONY CORPORATION, Tokyo 141 (JP)
(72) Inventor: Hoshimi, Susumu c/o Patent Division, Shinagawa-ku Tokyo 141 (JP); Muto, Takayasu c/o Patent Division, Shinagawa-ku Tokyo 141 (JP)
(74) Representative: Thomas, Christopher Hugo

(56) References cited:
- US-A- 3 737 883
- US-A- 3 812 533
- PATENT ABSTRACTS OF JAPAN, vol. 10, no. 312 (P-509)(2368), 23 October 1986, & JP-A-61 122977
- PATENT ABSTRACTS OF JAPAN, vol. 10, no. 48 (P-431)(2105), 25 February 1986, & JP-A-60 191481
- IBM TECHNICAL DISCLOSURE BULLETIN, vol. 26, no. 9, February 1984, pages 4450, 4451, New York, USA; D. W. ALBRECHT: "Servo Concept with multi-element transducers for achieving high track densities"

## Description

This invention relates to magnetic disc apparatus, and to methods of positioning a transducer relative to a magnetic disc having a plurality of track groups.

For controlling the position of a magnetic head with respect to a target data track, a variety of methods have been previously proposed, including a sector servo system and a servo-surface servo system.

In the sector servo system, as disclosed for example in Figure 2 of US patent specification US-A-3812533, a multiplicity of data tracks are provided on a magnetic disc, and servo tracks are so formed that one exists in a circumferential portion of each data track.

In the servo-surface servo system, as disclosed for example in Figure 1 of US patent specification US-A-4072990, servo tracks are formed on one entire surface of a magnetic disc.

It is also well known that, as described for example in US patent specification US-A-3737883, an external position sensor such as an optical sensor is employed to perform a search operation before reading out a servo signal written on a disc.

In the sector servo system where control is executed for each of the sectors individually, a rotation waiting time must elapse before a desired sector arrives and a servo signal is read out therefrom, so that the time required to effect a displacement of the head is made long. Moreover, as a servo track is formed in a circumferential portion of each data track, it is impossible to write the data in the entire circumferential length of the data track, and a margin is required for embedding a servo pattern.

In the servo-surface servo system where one whole surface of a magnetic disc is used for servo tracks, the utilization efficiency of the magnetic disc is low with regard to the data tracks.

Japanese patent specification JP-A-61/122977 discloses a magnetic disc device having features corresponding to the pre-characterizing part of claim 1. IBM TDB, Vol. 26, No. 9, February 1984 discloses such apparatus with a plurality of track groups each including servo tracks.

According to the present invention there is provided a magnetic disc apparatus comprising:
a magnetic disc having a plurality of data tracks and at least one reference track in which a servo signal is recorded;
a transducer for reading and writing data signals from and in said data tracks and for reading said servo signal from said reference track; and
actuator means for positioning said transducer over a desired one of said tracks;
characterized by:
position sensing means for sensing the position of said transducer relative to said magnetic disc;
said magnetic disc having a plurality of track groups thereon each of which comprises a plurality of said data tracks and at least one said reference track;
means for computing and generating a respective tracking error signal according to said servo signal read from each said reference track in an initialization mode;
memory means for storing said tracking error signal with respect to each of said track groups; and
controller means operative in a normal seek mode for controlling said actuator means according to said stored tracking error signal corresponding to the track group within which said transducer is to be positioned, and by the output of said position sensing means.

According to the present invention there is also provided a method of positioning a transducer relative to a magnetic disc having a plurality of track groups thereon each of which comprises a plurality of data tracks and at least one reference track in which a servo signal is recorded, said transducer reading and writing data signals from and in said data tracks and reading a servo signal from said reference track, said method being characterized by:
in an initialization mode the steps of:
positioning said transducer, under control of position sensing means, over said reference track in each of said track groups;
reading said servo signal from each of said reference tracks;
computing and generating tracking error signals according to said read servo signals; and
storing said tracking error signals for each of said track groups in a memory means;
and in a normal seek mode the steps of:
receiving a seek command according to which said transducer is to be positioned over a selected one of said data tracks;
reading said tracking error signal corresponding to the track group within which said selected one of said data tracks is included from said memory means; and
positioning said transducer over said selected one of said data tracks according to said read tracking error signal.

In an embodiment of the present invention, off-track quantities may be stored with regard to reference servo tracks formed circularly in data areas on a magnetic disc and, when displacing a magnetic head, the head is shifted in dependence on the stored off-track quantity after having been positioned by a head position detecting means. Furthermore, gradients of the off-track quantities to tracks at individual temperatures are previously stored and, after the actual temperature has been detected by means of a temperature sensor, the off-track quantity relative to the reference servo track is corrected in accordance with the gradient of the off-track quantity to the relevant track at the detected temperature.

The magnetic disc may be divided into a plurality of data areas. A plurality of circular reference servo tracks corresponding to the periodicity of the output signal of the head position detecting means may be formed in the data areas respectively. If the output signal of the head position detecting means has a periodicity of four phases with 90° shift, four reference servo tracks are formed in the shape of complete circles. Relative to each of these reference servo tracks in the data areas, there is stored in a memory of a microprocessor an off-track quantity which represents the difference between the position of the magnetic head where the output of the head position detecting means becomes zero and another position of the head set by the servo signal. The actual temperature is detected by means of a temperature sensor, and the off-track quantity relative to the reference servo track is corrected in accordance with the previously stored gradient of the off-track quantity to the track at the detected temperature. When the magnetic head is moved for reading or writing the data, the head is first positioned so that the output of the head position detecting means becomes zero, and then the head is displaced to an extent dependent on the corrected off-track quantity, whereby just tracking is attained. Thus, the magnetic head can be positioned exactly with respect to a desired data track while the head displacement time can be shortened. Moreover, it becomes possible to realize writing of data in the entire length of each circular data track.

The invention will now be described by way of example with reference to the accompanying drawings, through which like parts are referred to by like references, and in which:
Figure 1 is a circuit block diagram of an embodiment of magnetic disc apparatus according to the present invention; and
Figures 2 to 7 are diagrams for explaining the embodiment.

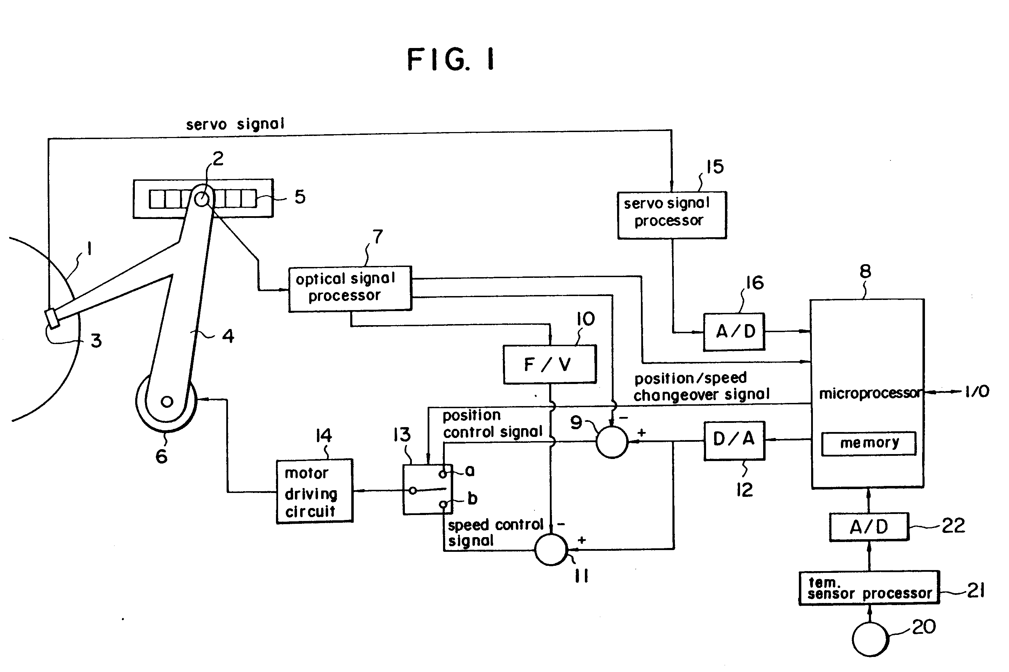

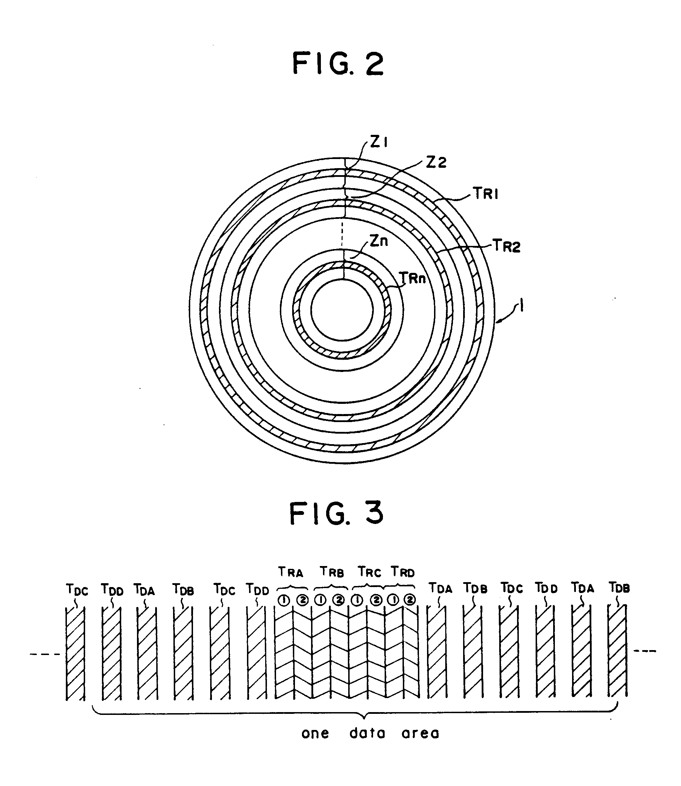

In the embodiment of Figure 1, a magnetic disc 1 forms a recording medium. The tracks of the magnetic disc 1 are divided into n sections of data areas Z1, Z2 ... Zn as illustrated in Figure 2, and a plurality of reference servo tracks TR1, TR2 ... TRn equivalent to the periodicity of an optical sensor 2 and forming a position detecting means are formed in the data areas Z1, Z2 ... Zn (but not in the data tracks), where position detecting signals are written.

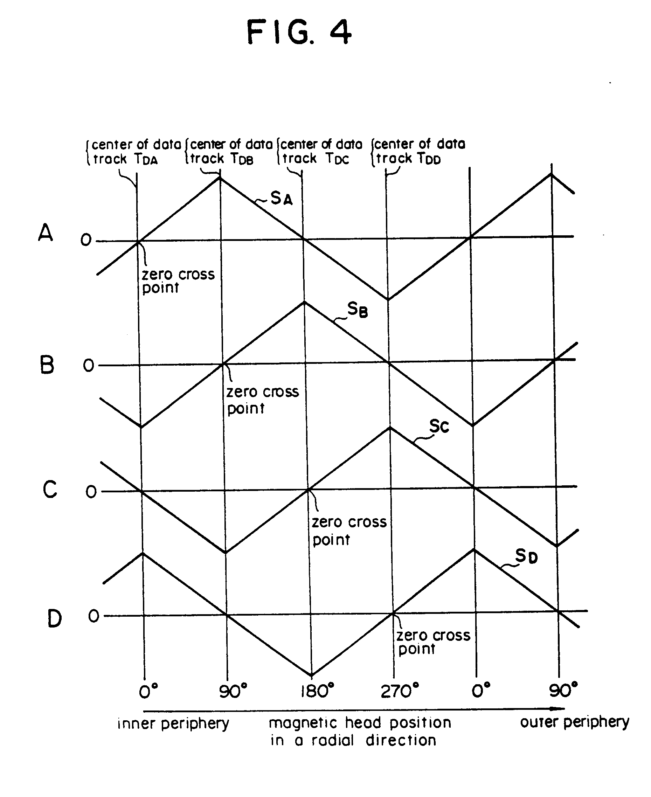

Supposing now that the optical sensor 2 generates output signals SA, SB, SC and SD of four phases having a mutual 90° phase difference as shown in Figure 4, and also that each of the output signals has a four-track period, then four reference servo tracks TRA, TRB, TRC and TRD are formed in the data areas corresponding to the periodicity of the signals as shown in Figure 3. In this example, each of the reference servo tracks TRA to TRD is composed of two tracks ① and ②. Data tracks TDA, TDB, TDC and TDD are formed on both sides of the reference servo tracks TRA to TRD. The tracks TDA, TDB, TDC and TDD correspond respectively to the four-phase output signals SA, SB, SC and SD of the optical sensor 2, and the right-ascending zero-cross point of the signal SA corresponds to the centre of the data track TDA (which does not signify a single data track, but represents a group of tracks repeated in a four-track period). Similarly, out of the zero-cross points of the signals SB, SC and SD, right-ascending points correspond to the centres of the data tracks TDB, TDC and TDD respectively. Here, the track width of the reference servo tracks ① and ② of the reference servo tracks TRA to TRD is supposed to be substantially equal to the track width of the data tracks TRA to TDD, and a tri-bit servo pattern or the like is recorded.

There are also shown a magnetic head 3 which is attached to an arm 4 together with the optical sensor 2, and scans the tracks on the magnetic disc 1, an optical scale 5 and an actuator motor 6. The optical sensor 2 in this example comprises four light sensitive elements and reticle elements disposed in front thereof with a 90° phase difference maintained. One light emitting element (not shown) is disposed correspondingly thereto on the reverse side of the optical scale 5.

As the arm 4 is driven by the motor 6, the optical sensor 2 attached to the arm 4 is moved along the optical scale 5, and simultaneously the magnetic head 3 is also moved on the magnetic disc 1 in accordance with displacement of the optical sensor 2. With such motion of the arm 4, slits in the reticle elements and those in the optical scale 5 are repeatedly brought into and out of positional coincidence, whereby output signals SA, SB, SC and SD are produced from the four light sensitive elements.

The output of the optical sensor 2 is fed to an optical signal processor 7 for amplification, and is then fed to a microprocessor 8. In this embodiment, one pulse signal is fed from the optical signal processor 7 to the microprocessor 8 per scanning of one track by the magnetic head 3.

The output signal of the optical signal processor 7 is also fed to one input of a subtractor 9 while being fed also to a frequency/voltage (F/V) converter 10, where the frequency signal is converted into a voltage signal, and is then fed as speed information to one input of a subtractor 11.

A digital-to-analogue (D/A) converter 12 converts the digital output signal of the microprocessor 8 into an analogue signal, which is then fed to the other inputs of the subtractors 9 and 11, so that subtraction of the two input signals is executed therein. As a result, the subtractor 9 generates a position control signal, while the subtractor 11 generates a speed control signal, and these are fed to contacts a and b respectively of a switch circuit 13.

The switch circuit 13 is selectively changed by a position/speed changeover signal obtained from the microprocessor 8. The operation of the apparatus is so switched that a position control mode or a speed control mode is selected when the switch circuit 13 engages the contact a or b.

The control signal passed through the switch circuit 13 is fed to a motor driving circuit 14, which produces an output signal to drive the motor 6.

During the scanning of reference servo tracks by the magnetic head 3, a servo signal is fed to a servo signal processor 15 which detects the difference between the two signals obtained from the reference servo tracks ① and ②. This difference which in the form of an analogue signal is converted by an analogue-to-digital (A/D) converter 16 into a digital signal, which is fed to the microprocessor 8.

The apparatus also includes a temperature sensor 20 associated with the microprocessor 8, a temperature sensor processor 21 for amplifying the output of the temperature sensor 20, and an A/D converter 22 for converting the output analogue signal of the temperature sensor processor 21 into a digital signal, and feeding it to the microprocessor 8.

As will be described later, the microprocessor 8 previously stores in its memory gradients of the off-track quantities relative to the tracks at individual temperatures.

The circuit operation of the embodiment of Figure 1 will now be described.

When the power supply is initially switched on, seek commands to the reference servo tracks TR1, TR2 .., TRn formed in the data areas are supplied sequentially from the microprocessor 8, and the switch circuit 13 engages the contact b in response to the position/speed changeover signal from the microprocessor 8, whereby a speed control mode is selected. A speed reference value is supplied from the microprocessor 8 to the D/A converter 12, and the corresponding output signal of the D/A converter 12 is fed to one input of the subtractor 11. Simultaneously the output signal of the optical sensor 2 is fed via the optical signal processor 7 to the F/V converter 10, whose output speed signal is fed to the other input of the subtractor 11 so as to be subtracted from the signal corresponding to the preceding speed reference value. The error voltage thus obtained is fed via the motor driving circuit 14 to the motor 6, whereby the magnetic head 3 attached to the arm 4 is moved to the vicinity of the first reference servo track such as TRA in the data area Z1. Track pulses are counted successively, so that the magnetic head 3 is driven to the target reference servo track.

Subsequently the switch control 13 engages the contact a in response to the position/speed changeover signal from the microprocessor 8, whereby a position control mode is selected. A position reference value is supplied from the microprocessor 8 to the D/A converter 12, and the corresponding output signal of the D/A converter 12 is fed to one input of the subtractor 9. The position reference value given first in this stage is zero. Simultaneously the output signal of the optical sensor 2 is fed via the optical signal processor 7 to one input of the subtractor 9 so as to be subtracted from the signal corresponding to the preceding position reference value. Depending on which of the four reference servo tracks TRA, TRB, TRC and TRD is an object of the seek command, the optical signal processor 7 selects one of the four-phase output signals of the optical sensor 2. The error voltage thus obtained is fed via the motor driving circuit 14 to the motor 6 so that the magnetic head 3 attached to the arm 4 is moved and brought to a halt at a position where the error voltage becomes zero, that is on the reference servo track related to the seek command. However, this position is not coincident with the track centre due to variations including thermal expansion of the magnetic disc 1, the arm 4 and the optical scale 5.

Subsequently the servo signal pre-recorded on the magnetic disc 1 is detected by the magnetic head 3 and, after being processed by the servo signal processor 15, the signal is fed to the A/D converter 16 which converts the analogue signal into a digital signal. Then the digital signal is fed to the microprocessor 8 which calculates the deviation from the centre of the actual reference servo track.

The microprocessor 8 computes an off-track quantity which is the difference between the optical centre or the position of the magnetic head 3 where the output of the optical sensor 2 becomes zero and another position of the magnetic head 3 so determined by the servo signal that the detection outputs of the reference servo tracks ① and ② becomes zero. The off-track quantity thus computed is stored in a memory of the microprocessor 8.

Simultaneously, off-track quantities with regard to the second to fourth reference servo tracks are also computed, and furthermore those with regard to the reference servo tracks in the entire n sections of data areas are computed and stored in the memory of the microprocessor 8.

In a seek operation for reading or writing the data, the magnetic head 3 is first moved to the designated data track by the output signal of the optical sensor 2, and then the microprocessor 8 computes to find one of the data areas 1 to n and one of the four track periods to which the track posterior to this movement of the magnetic head 3 relates. The relevant off-track quantity is then read out of the memory. The position reference value for the off-track quantity is supplied from the microprocessor 8 to the D/A converter 12, whose output signal is then fed via the subtractor 9 and the contact a of the switch circuit 13 to the motor driving circuit 14 which produces a driving signal to rotate the motor 6, thereby displacing the arm 4 slightly to move the magnetic head 3 by an extent corresponding to the off-track quantity from the optical signal centre corresponding to the position where the output of the optical sensor 2 becomes zero, so that the magnetic head 3 is placed in a just tracking state.

Since the off-track quantity changes depending on variations such as ambient temperature fluctuations, the off-track quantity stored in the memory of the microprocessor 8 is renewed by accessing the reference servo track again in the two cases mentioned below.
1) In seeking a desired data track, if no search has been executed for more than a predetermined time in the data area to which the desired data track belongs, the reference servo track for such data track is accessed and, after the off-track quantity to be stored has been renewed by the servo signal, the magnetic head 3 is displaced to the desired data track and is then shifted slightly in dependence on the renewed off-track quantity so as to achieve just tracking.
2) If the magnetic head 3 is positioned in one data track continuously for more than a predetermined time, the reference servo track for the data area related to that data track is accessed to renew the off-track quantity by the servo signal and, after returning to the former data track, the magnetic head 3 is shifted slightly in dependence on the renewed off-track quantity from the position set by the optical signal centre, hence realizing a just-tracking state.

For renewing the off-tracking quantity in the reference servo track of one data area, there are the following two procedures.
1) All four reference servo tracks in one data area are accessed, and the off-track quantities thereof are renewed after calculation on the basis of servo signals.
2) One of the four reference servo tracks in the data area is accessed as a representative, and the off-track quantity thereof is renewed. In this procedure, renewal of the off-track quantity is executed by first computing the difference between the previously stored off-track quantity of the representative reference servo track and the new off-track quantity obtained by the above access, and then adding the computed difference to the off-track quantity of the reference servo track in the data area.

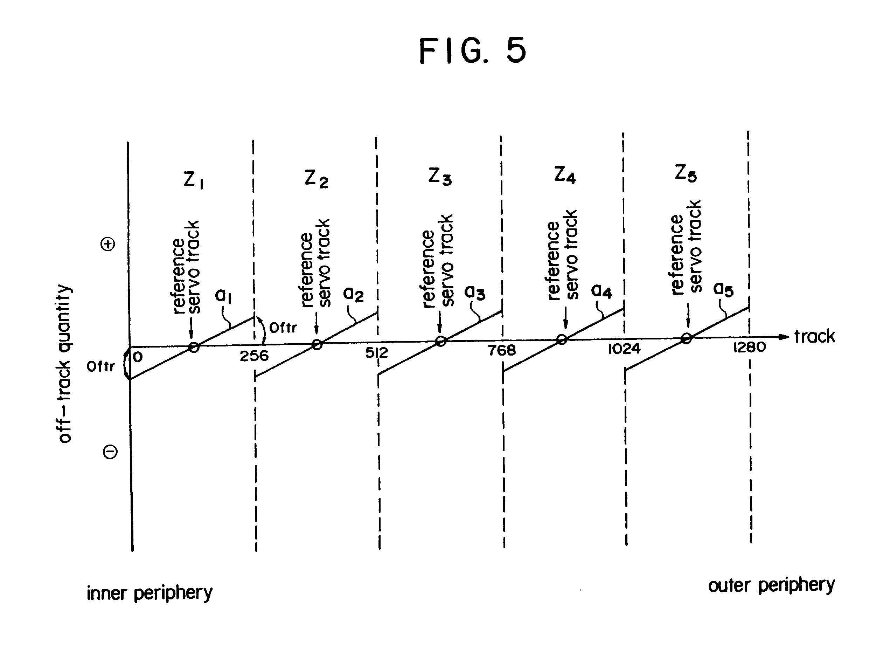

With the above procedure which corrects the off-track quantity on the basis of a typical value representing the off-track quantity of the reference servo track in the data area, the off-track quantity oftr shown in Figure 5 remains at each end of data areas Z1 to Z5 in case the gradient of the off-track quantity to the track varies due to temperature from the outer periphery of the magnetic disc 1 towards the inner periphery thereof. That is, in Figure 5 showing the typical data areas Z1 to Z5, a1 to a5 denote changes in the off-track quantities after correction by the use of reference servo tracks. Although the off-track quantity is substantially zero at the position of each reference servo track, it gradually increases towards the end of the data area, and the maximum off-track quantity oftr remains at each end of the data areas Z1 to Z5. There is no problem if the off-track quantity oftr is a permissible amount, but some further action is required when it is desired to eliminate such amount as well.

Thus in the embodiment, the gradients of the off-track quantities to the tracks at individual temperatures are previously stored in the memory of the microprocessor 8, and the actual temperature in the apparatus is detected by the temperature sensor 20. Then the stored gradient of the off-track quantity relative to the detected temperature is read out and, after computation has been executed on the basis of such gradient of the off-track quantity to the relevant track, the off-track quantity obtained with regard to the reference servo track is corrected so that the off-track quantity can be reduced substantially to zero in any of the data tracks.

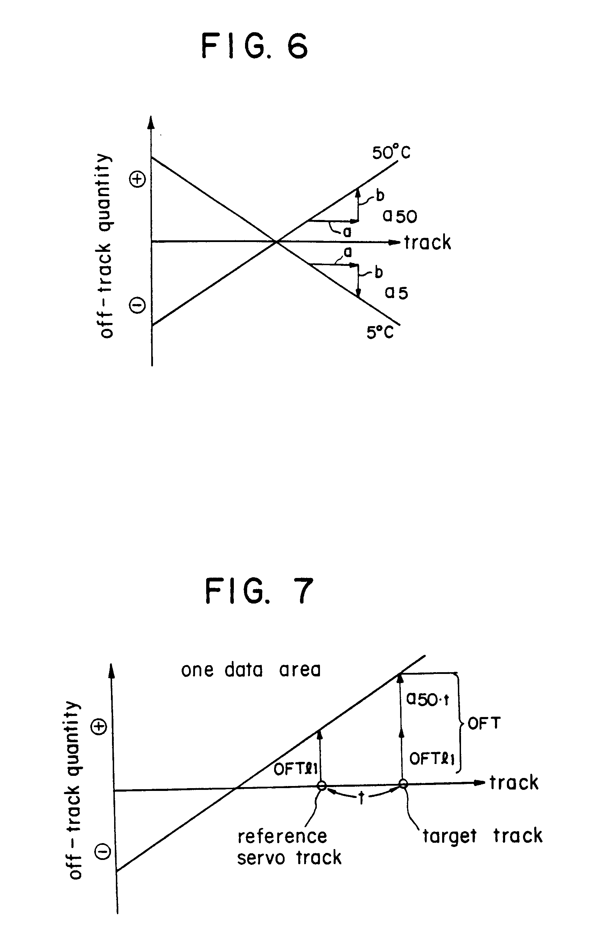

For the purpose mentioned, as graphically plotted in Figure 6, first the gradients of the off-track quantities to tracks at individual temperatures are stored as information in the memory of the microprocessor 8. Figure 6 shows typical gradients a50 and a5 of the off-track quantity to one track at 50°C and 5°C, wherein arrows a and b represent a change in the number of tracks and a change in the off-track quantity, respectively. The gradients a50 and a5 of the off-track quantity to the track are computed from the change in the number of tracks and that in the off-track quantity, and the information thus obtained is stored previously in the memory of the microprocessor 8. It is assumed here that if the materials of the magnetic disc 1, the arm 4, the optical sensor 5 and so on are determined, the gradient of each off-track quantity is determined uniquely by a temperature.

Subsequently the actual temperature in the apparatus is detected by the temperature sensor 20, and the temperature information is fed to the microprocessor 8 via the processor 21 and the A/D converter 21. When the detected temperature in the apparatus is 50°C, for example, the microprocessor 8 computes the off-track quantity in the target track from the gradient a50 of the off-track quantity to the data track at 50°C.

As shown in Figure 7 where t denotes the number of tracks existing between the target track and the reference servo track in the data area to which the target track belongs, the microprocessor 8 discriminates the ordinal of one of m periods (four periods in this example) in which the target track exists and, if it is in the 1th period, the off-track quantity OFT in the target track is expressed as

$\text{OFT = OFT} {\text{1}}_{̲} \text{1 + a50 x t}$

where OFT11 is the off-track quantity relative to the 1th reference servo track in the data area to which the target track belongs.

Therefore, after the magnetic head 3 has been displaced to the target track, the magnetic head 3 is further shifted slightly to an extent dependent on the calculated off-track quantity OFT from the position set at the zero-cross point of the optical sensor 2, whereby a just-tracking state is achieved.

Thus, it becomes possible to reduce the off-track quantity substantially to zero in any data track, so ensuring high-precision tracking.

Although the above embodiment uses four light sensitive elements for obtaining output signals of four phases from the optical sensor, it is possible to use only two light sensitive elements and to obtain the remaining two output signals from them via inverters.

If a plurality of magnetic discs are used, reference servo tracks may be formed on the individual magnetic discs as described above, or reference servo tracks may be formed merely on a single magnetic disc disposed at the centre and such tracks may be utilized for access to data tracks on the remaining upper and lower discs.

As described above, where the previously stored off-track quantity is corrected at the time of displacing the magnetic head to achieve a just-tracking state, it becomes possible to ensure high-precision tracking with the off-track quantity reduced substantially to zero in any data track, and also to eliminate the time that may otherwise be required until reading out a servo signal, thereby expediting the head displacement. Furthermore, data can be written along the entire length of each circular data track, as there is no servo pattern in the data track, so that the efficiency of utilizing the magnetic disc surface is enhanced. In addition, the respective off-track quantities in the data areas can be corrected individually by disposing four reference servo tracks corresponding to the four-phase output signals of the optical sensor, and further correction is possible with regard to periodicity variation in the periodic output signal of the position detecting means.

## Claims

1. A magnetic disc apparatus comprising:
a magnetic disc (1) having a plurality of data tracks and at least one reference track in which a servo signal is recorded;
a transducer (3) for reading and writing data signals from and in said data tracks and for reading said servo signal from said reference track; and
actuator means (4, 6) for positioning said transducer (3) over a desired one of said tracks;
characterized by:
position sensing means (2, 5) for sensing the position of said transducer (3) relative to said magnetic disc (1);
said magnetic disc (1) having a plurality of track groups thereon each of which comprises a plurality of said data tracks and at least one said reference track;
means (8) for computing and generating a respective tracking error signal according to said servo signal read from each said reference track in an initialization mode;
memory means (8) for storing said tracking error signal with respect to each of said track groups; and
controller means (13, 14) operative in a normal seek mode for controlling said actuator means (4, 6) according to said stored tracking error signal corresponding to the track group within which said transducer (3) is to be positioned, and by the output of said position sensing means (2, 5).

2. Apparatus according to claim 1 wherein said position sensing means (2, 5) generates a plurality of periodic signals which are out of phase with each other and the periods of which correspond to a plurality of track pitches, and the number of reference tracks within one track group corresponds to the number of track pitches.

3. Apparatus according to claim 1 where each of said reference tracks is recorded in the centre of a respective said track group.

4. Apparatus according to claim 2 wherein said reference tracks are recorded in the centre of each of said track groups.

5. Apparatus according to any one of the preceding claims further comprising temperature detecting means (20) for detecting the temperature of said apparatus, and means (21, 22, 8) for compensating said tracking error signal according to the output of said temperature detecting means (20) and for generating a compensated error signal, and wherein said controller means (13, 14) controls said actuator means (4, 6) according to said compensated error signal.

6. A method of positioning a transducer (3) relative to a magnetic disc (1) having a plurality of track groups thereon each of which comprises a plurality of data tracks and at least one reference track in which a servo signal is recorded, said transducer (3) reading and writing data signals from and in said data tracks and reading a servo signal from said reference track, said method being characterized by:
in an initialization mode the steps of:
positioning said transducer (3), under control of position sensing means (2, 5), over said reference track in each of said track groups;
reading said servo signal from each of said reference tracks;
computing and generating tracking error signals according to said read servo signals; and
storing said tracking error signals for each of said track groups in a memory means (8);
and in a normal seek mode the steps of:
receiving a seek command according to which said transducer (3) is to be positioned over a selected one of said data tracks;
reading said tracking error signal corresponding to the track group within which said selected one of said data tracks is included from said memory means (8); and
positioning said transducer (3) over said selected one of said data tracks according to said read tracking error signal.

## Patentansprüche

1. Magnet-Disk-Gerät mit:
- einer Magnet-Disk (1) mit einer Vielzahl von Datenspuren und wenigstens einer Bezugsspur, in der ein Servosignal aufgezeichnet ist;
- einem Wandler (3) zum Auslesen und Einschreiben von Datensignalen aus bzw. in diese Datenspuren und zum Auslesen des Servosignals aus der Bezugsspur; und
- einer Aktuatoreinrichtung (4,6), mit der der Wandler (3) über einer gewünschten Spur dieser Spuren zu positionieren ist;
**gekennzeichnet dadurch:**
- daß eine Positions-Sensoreinrichtung (2,5) vorgesehen ist, mit der die Position des Wandlers (3) in Bezug auf die Magnet-Disk (1) zu ermitteln ist;
- daß die Magnet-Disk (1) eine Vielzahl von Spuren-Gruppen aufweist, von der eine jede eine Vielzahl an Datenspuren und wenigstens eine Bezugsspur umfaßt;
- daß Mittel (8) zum Errechnen und Erzeugen eines jeweiligen Spur-Fehlersignals vorgesehen sind, das dem Servosignal entspricht, das aus einer jeden Bezugsspur in einem Start-Modus ausgelesen ist;
- daß eine Speichereinrichtung (8) vorgesehen ist, um das Spur-Fehlersignal, bezogen auf eine jede der Spuren-Gruppen, zu speichern und
- daß eine Steuereinrichtung (13,14) vorgesehen ist, die in einem normalen Such-Modus zur Steuerung der Aktuatoreinrichtung (4,6) entsprechend dem gespeicherten Spur-Fehlersignal, das der Spuren-Gruppen entspricht, innerhalb derer der Wandler zu positionieren ist, und entsprechend dem Ausgangssignal der Positions-Sensoreinrichtung (2,5) arbeitet.

2. Gerät nach Anspruch 1,
bei dem die Positions-Sensoreinrichtung (2,5) eine Vielzahl periodischer Signale erzeugt, die zueinander nicht in Phase sind und deren Periodendauern einer Vielzahl der Spur-Teilungen entspricht und wobei die Anzahl der Bezugsspuren innerhalb einer Spuren-Gruppe der Anzahl der Spur-Teilungen entspricht.

3. Gerät nach Anspruch 1,
bei dem eine jede der Bezugsspuren in der Mitte einer jeweiligen Spurengruppe aufgezeichnet ist.

4. Gerät nach Anspruch 2,
bei dem die Bezugsspuren in der Mitte einer jeden Spuren-Gruppe aufgezeichnet sind.

5. Gerät nach irgendeinem der vorangehenden Ansprüche, bei dem dieses Gerät desweiteren eine Temperatur-Detektoreinrichtung (20) zur Detektion der Temperatur des Gerätes, und Mittel (21,22,8) zur Kompensation des Spur-Fehlersignals entsprechend dem Ausgangssignal der Temperatur-Detektoreinrichtung (20) und zur Erzeugung eines kompensierten Fehlersignals hat,
und bei dem die Steuereinrichtung (13,14) die Aktuatoreinrichtung (4,6) entsprechend dem kompensierten Fehlersignal steuert.

6. Verfahren zur Positionierung eines Wandlers in Bezug auf eine Magnet-Disk (1), die eine Vielzahl Spuren-Gruppen hat, von der eine jede eine Vielzahl von Datenspuren und wenigstens eine Bezugsspur hat, in der ein Servosignal aufgezeichnet ist, wobei der Wandler (3) Datensignale aus den Datenspuren ausliest und in diese einschreibt und ein Servosignal aus der Bezugsspur ausliest, wobei dieses Verfahren dadurch gekennzeichnet ist:
daß in einem Start-Modus die Verfahrensschritte erfolgen:
- Positionieren des Wandlers (3) unter Steuerung durch die Positions-Sensoreinrichtung (2,5) über die Bezugsspur einer jeden Spuren-Gruppe;
- Auslesen des Servosignals aus einer jeden der Bezugsspuren;
- Errechnen und Erzeugen von Spur-Fehlersignalen entsprechend den ausgelesenen Servosignalen; und
- Speichern dieser Spur-Fehlersignale für eine jede der Spuren-Gruppen in einer Speichereinrichtung (8);
und in einem normalen Such-Modus die Verfahrensschritte erfolgen:
- Empfang eines Suchbefehls, dem entsprechend der Wandler (3) über eine ausgewählte Datenspur zu positionieren ist;
- Auslesen des Spur-Fehlersignals aus der Speichereinrichtung (8), wobei dieses Spur-Fehlersignal derjenigen Spuren-Gruppe entspricht, innerhalb derer sich die ausgewählte Datenspur befindet; und
- Positionieren des Wandlers (3) über die ausgewählte Datenspur entsprechend dem ausgelesenen Spur-Fehlersignal.

## Revendications

1. Appareil à disques magnétiques comprenant:
un disque magnétique (1) comportant une pluralité de pistes de données et au moins une piste de référence sur laquelle est enregistré un signal d'asservissement;
un transducteur (3) pour lire et écrire des signaux de données sur lesdites pistes de données et pour lire ledit signal d'asservissement sur ladite piste de référence; et
un moyen actionneur (4,6) pour positionner ledit transducteur (3) sur une piste voulue desdites pistes;
caractérisé par:
un moyen détecteur de position (2,5) pour détecter la position dudit transducteur (3) par rapport audit disque magnétique (1);
ledit disque magnétique (1) comportant une pluralité de groupes de pistes sur celui-ci dont chacun comprend une pluralité desdites pistes de données et au moins unedite piste de référence;
un moyen (8) pour calculer et générer un signal d'erreur de centrage respectif selon ledit signal d'asservissement lu sur chaquedite piste de référence dans un mode d'initialisation;
un moyen à mémoire (8) pour mémoriser ledit signal d'erreur de centrage par rapport à chacun desdits groupes de pistes; et
un moyen contrôleur (13,14) actif dans un mode de recherche normal pour commander ledit moyen actionneur (4,6) selon ledit signal d'erreur de centrage mémorisé correspondant au groupe de pistes dans lequel ledit transducteur (3) doit être positionné, et par le signal de sortie dudit moyen détecteur de position (2,5).

2. Appareil selon la revendication 1, dans lequel ledit moyen détecteur de position (2,5) génère une pluralité de signaux périodiques qui sont déphasés entre eux et dont les périodes correspondent à une pluralité de pas de pistes, et le nombre de pistes de référence dans un groupe de pistes correspond au nombre de pas de pistes.

3. Appareil selon la revendication 1, dans lequel chacune desdites pistes de référence est enregistrée au centre d'undit groupe de pistes respectif.

4. Appareil selon la revendication 2, dans lequel lesdites pistes de référence sont enregistrées au centre de chacun desdits groupes de pistes.

5. Appareil selon l'une quelconque des revendications 1 à 4, comprenant en outre un moyen détecteur de température (20) pour détecter la température dudit appareil, et un moyen (21,22,8) pour compenser ledit signal d'erreur de centrage selon le signal de sortie dudit moyen détecteur de température (20) et pour générer un signal d'erreur compensée, et dans lequel ledit moyen contrôleur (13,14) commande ledit moyen actionneur (4,6) selon ledit signal d'erreur compensée.

6. Procédé pour positionner un transducteur (3) par rapport à un disque magnétique (1) comportant une pluralité de groupes de pistes sur celui-ci dont chacun comprend une pluralité de pistes de données et au moins une piste de référence sur laquelle est enregistré un signal d'asservissement, ledit transducteur (3) lisant et écrivant des signaux de données sur lesdites pistes de données et lisant un signal d'asservissement sur ladite piste de référence, ledit procédé étant caractérisé par:
dans un mode d'initialisation, les étapes qui consistent à:
positionner ledit transducteur (3), sous la commande d'un moyen détecteur de position (2,5), sur ladite piste de référence dans chacun desdits groupes de pistes;
lire ledit signal d'asservissement sur chacune desdites pistes de référence;
calculer et générer des signaux d'erreur de centrage selon lesdits signaux d'asservissement lus;et à
mémoriser lesdits signaux d'erreur de centrage pour chacun desdits groupes de pistes dans un moyen à mémoire (8);
et, dans un mode de recherche normal, les étapes qui consistent à:
recevoir une commande de recherche selon laquelle ledit transducteur (3) doit être positionné sur une piste sélectionnée desdites pistes de données;
lire ledit signal d'erreur de centrage correspondant au groupe de pistes dans lequel ladite piste sélectionnée desdites pistes de données est incluse dans ledit moyen à mémoire (8); et à
positionner ledit transducteur (3) sur ladite piste sélectionnée desdites pistes de données selon ledit signal d'erreur de centrage lu.
